(19) Europäisches Patentamt

European Patent Office

Office européen des brevets

(11) **EP 1 145 416 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(21) Anmeldenummer: **00975810.3**

(22) Anmeldetag: **29.09.2000**

(51) Int Cl.⁷: **H02M 7/00**

(86) Internationale Anmeldenummer:
**PCT/DE00/03404**

(87) Internationale Veröffentlichungsnummer:
**WO 01/026210 (12.04.2001 Gazette 2001/15)**

(54) **UMRICHTER FÜR DIE UMFORMUNG VON ELEKTRISCHER ENERGIE**

INVERTER FOR CONVERSION OF ELECTRICAL ENERGY

CONVERTISSEURS POUR LA TRANSFORMATION D'ENERGIE ELECTRIQUE

(84) Benannte Vertragsstaaten:
**DE ES FR GB IT SE**

(30) Priorität: **01.10.1999 DE 19947476**

(43) Veröffentlichungstag der Anmeldung:
**17.10.2001 Patentblatt 2001/42**

(73) Patentinhaber: **ROBERT BOSCH GMBH**
**70442 Stuttgart (DE)**

(72) Erfinder:
• **RIEGER, Reinhard**
**70372 Stuttgart (DE)**
• **REUTLINGER, Kurt**
**70174 Stuttgart (DE)**

(56) Entgegenhaltungen:
**EP-A- 0 683 560          EP-A- 0 740 394**
**EP-A- 0 777 309          US-A- 5 726 557**
**US-A- 5 903 121**

• **PATENT ABSTRACTS OF JAPAN vol. 1995, no. 10, 30. November 1995 (1995-11-30) & JP 07 170746 A (NIPPONDENSO CO LTD), 4. Juli 1995 (1995-07-04)**

EP 1 145 416 B1

## Beschreibung

Die Erfindung betrifft Umrichter für die Umformung von elektrischer Energie, insbesonders für die von einem Generator erzeugte elektrische Energie für ein Fahrzeugbordnetz.

Stand der Technik

Die Umformung von elektrischer Energie, beispielsweise in einem Fahrzeugbordnetz, erfolgt heute üblicherweise durch statische Umrichter. In diesen leistungselektronischen Schaltungen werden häufig Gleichgrößen in Wechselgrößen einer bestimmten Frequenz oder umgekehrt Wechselgrößen in Gleichgrößen umgeformt. Die Wechsel- bzw. Gleichgrößen sind beispielsweise Spannungen oder Ströme. Für die Umformung der Größen besteht auch die Möglichkeit, daß Gleichgrößen in Gleichgrößen, beispielsweise eine Gleichspannung in eine Gleichspannung mit einem anderen Spannungsniveau umgeformt werden. Bei dieser Spannungsumformung kann auch ein Energiefluß in beiden Richtungen erfolgen.

Umrichter mit einem Spannungszwischenkreis (Spannungsumrichter) und selbstgeführte Brückenschaltungen, beispielsweise Gleichrichterbrückenschaltungen in einem Fahrzeugbordnetz, sind heute die Standardlösung für fast alle Umrichteranwendungsgebiete. Dabei kann der Zwischenkreis auch direkt durch ein Gleichspannungsnetz gebildet werden. Der Zwischenkreis ist für die Zwischenspeicherung der Energie erforderlich. Als Zwischenspeicher dient dabei ein Kondensator mit einer möglichst großen Kapazität.

Die erforderliche Kapazität des Zwischenkreiskondensators wird bestimmt durch die Energie, die er zwischenspeichern muß und durch den daraus resultierenden Wechselstrom. Meist wird für den Zwischenkreis ein Elektrolytkondensator verwendet, falls größere Energiemengen zwischengespeichert werden müssen, werden mehrere Elektrolytkondensatoren eingesetzt. Diese besitzen bezüglich ihres Volumens eine besonders große Kapazität, sie sind jedoch bauartbedingt sehr empfindlich gegenüber hohen Temerperaturen. Dies führt insbesonders bei höheren Temperaturen zu einer Alterung der Elektrolytkondensatoren und zu einem frühen Ausfall. Weitere Nachteile der Elektrolytkondensatoren sind deren geringe Stromtragfähigkeit, ihr relativ großer Innenwiderstand und die parasitären Induktivitäten in Reihe zur Kapazität.

Ein Umrichter für die Umformung von elektrischer Energie, bei dem in einem Fahrzeugbordnetz die von einem Drehstromgenerator gelieferte Spannung umgeformt wird, ist beispielsweise aus der DE-OS 196 46 043 bekannt. Bei diesem bekannten System wird der Drehstromgenerator gleichzeitig auch als Starter betrieben. Damit die Maschine sowohl als Starter als auch als Generator arbeiten kann und zur optimalen Regelung der Ausgangsspannung bei Generatorbetrieb ist die elektrische Maschine über eine gesteuerte Gleichrichterbrücke über einen Zwischenkreiskondensator mit dem Bordnetz einschließlich der Batterie verbunden. Die Gleichrichterbrücke umfaßt dabei sechs Pulswechselrichterelemente, die von einem Bordnetzsteuergerät angesteuert werden.

Aufgabe der Erfindung

Die in den bekannten Spannungsumrichtern erforderlichen Zwischenkreiskapazitäten, bzw. die Eingangskapazität bei Gleichspannungswandlern (DC/DC-Wandlern), erfordern einen nicht unerheblichen Bauraum. Häufig ist der Zwischenkreiskondensator, beispielsweise ein Elektrolytkondensator das Bauelement mit dem größten Volumen. Da dies ein Nachteil ist, besteht die Aufgabe der Erfindung darin, den Wert der Zwischenkreiskapazität und insbesonders auch die Größe der Zwischenkreiskapazität bzw. des Zwischenkreiskondensators oder die Eingangskapazität bei einem Spannungswandler deutlich zu reduzieren und hierdruch das Bauvolumen und die Kosten zu verringern. Eine weitere Aufgabe besteht darin, eine Möglichkeit zu schaffen bei der die Kapazität so weit reduziert werden kann, daß von den üblicherweise im Zwischenkreis eingesetzten Elektrolytkondenatoren auf andere Kondensatorprinzipien übergegangen werden kann. Eine weitere Aufgabe der Erfindung besteht darin, Drosselanordnungen so auszugestalten, dass die verschiedenen Zweige der Umrichter voneinander entkoppelt sind.

Aus der US-PS 5 726 557 ist ein Spannungsversorgungssystem für ein Kraftfahrzeug bekannt, das einen Drehstromgenerator umfasst, dessen Ausgangsspannung bzw. Ausgangsstrom mit Hilfe einer gesteuerten Gleichrichterbrücke gleichgerichtet wird. Die Ansteuerung der Felddefekttransistoren der gesteuerten Gleichrichterbrücke erfolgt dabei so, dass eine mit besonders hohem Wirkungsgrad arbeitende Gleichrichtung erhalten wird. Dazu werden die Felddefekttransistoren der Gleichrichterbrücke gegeneinander zeitlich versetzt so angesteuert, dass bestimmte Wicklungen des Generators zu vorgebbaren Zeiten kurzgeschlossen werden, wodurch eine, gegenüber der üblichen Ausgangsspannung des Generators erhöhte, Spannung erhalten wird, die zur Versorgung des Bordnetzes dient.

Vorteile der Erfindung

Der erfindungsgemäße Umrichter für die Umformung von elektrischer Energie mit den Merkmalen des Anspruchs 1 hat den Vorteil, daß als Zwischenkreiskapazität ein Kondensator ausreicht, dessen Kapazität gegenüber herkömmlichen Systemen deutlich verringert ist. Dadurch ist es in vorteilhafter Weise möglich, die Größe des Zwischenkreiskondensators deutlich zu verringern und damit das Bauvolumen sowie die entstehenden Kosten zu reduzieren. In besonders vorteilhafter Weise ist die Ausgestaltung des Umrichters, der wenigstens einen High-Side- und einen Low-Side-Schalter umfaßt, so möglich, daß die erforderliche Kapazität so weit reduziert werden kann, daß von den üblicherweise eingesetzten Elektrolytkondensatoren auf andere Kondensatorprinzipien übergegangen werden kann. Dadurch werden die besonderen Vorteile erzielt, daß die geringe Stromtragfähigkeit sowie Alterungs- und Temperaturempflichkeiten von Elektrolytkondensatoren umgangen werden können.

Weitere Vorteile der Erfindung werden durch die in den Unteransprüchen angegebenen Maßnahmen erzielt. Dabei ist es von Vorteil, dass der oder die Umrichter bzw. DC/DC-Wandler als getrennte Halbbrücken mit Halbleiterventilen aufgebaut werden können, die in vorteilhafter Weise auch zusammengefaßt werden können zu einem kompletten Umrichtermodul, das in besonders vorteilhafter Weise in das Generatorgehäuse bzw. Maschinengehäuse integrierbar ist.

Durch geeignet versetzte Ansteuerung der Halbbrücken kann in vorteilhafter weise ein besonders geringer Spannungsrippel erhalten werden. Durch gleichzeitige Ansteuerung parallel geschalteter Halbleiterventile oder Halbleiterschalter einer Halbbrücke werden Kurzschlüsse sicher vermieden.

Der Einsatz von gekoppelten Drosseln ermöglicht eine besonders vorteilhafte Entkopplung verschiedener Zweige der Umrichter. Die Maschinenwicklung beispielsweise für einen Klauenpolgenerator in Dreieckschaltung kann durch vorteilhafte Anordnung der Drosseln so ausgeführt werden, dass eine Entkopplung zweier Teilzweige erhalten wird.

Zeichnung

Ausführungsbeispiele der Erfindung sind in den Figuren der Zeichnung dargestellt und werden in der nachfolgenden Beschreibung näher erläutert. Im einzelnen zeigt Figur 1 eine Dreiphasenmaschine mit beispielhaft angegebenen vier parallelen Zweigen je Phase, Figur 2 zeigt eine Schaltungsausgestaltung, bei der die Halbbrückenmodule des Umrichters verteilt über den Maschinenumfang angeordnet sind. Figur 3 zeigt eine weitere Ausgestaltung einer Dreiphasenmaschine. In Figur 4 ist ein Modul einer Halbbrücke für versetzte Ansteuerung dargestellt und Figur 5 zeigt einen vollständigen Dreiphasenumrichter, der aus drei identischen Halbbrücken für versetzte Ansteuerung aufgebaut ist. Figur 6 zeigt eine Ausführungsform der Erfindung für einen Gleichspannungswandler (DC/DC-Wandler) mit unterschiedlichen Spannungsniveaus und Figur 7 eine Zusammenstellung von Zwischenkreisströmen für verschiedene Tastverhältnisse. In Figur 8 ist ein Brückenmodul mit Längsdrosseln und in Figur 9 ein Brückenmodul mit Querdrosseln für eine Gleichrichterbrücke dargestellt.

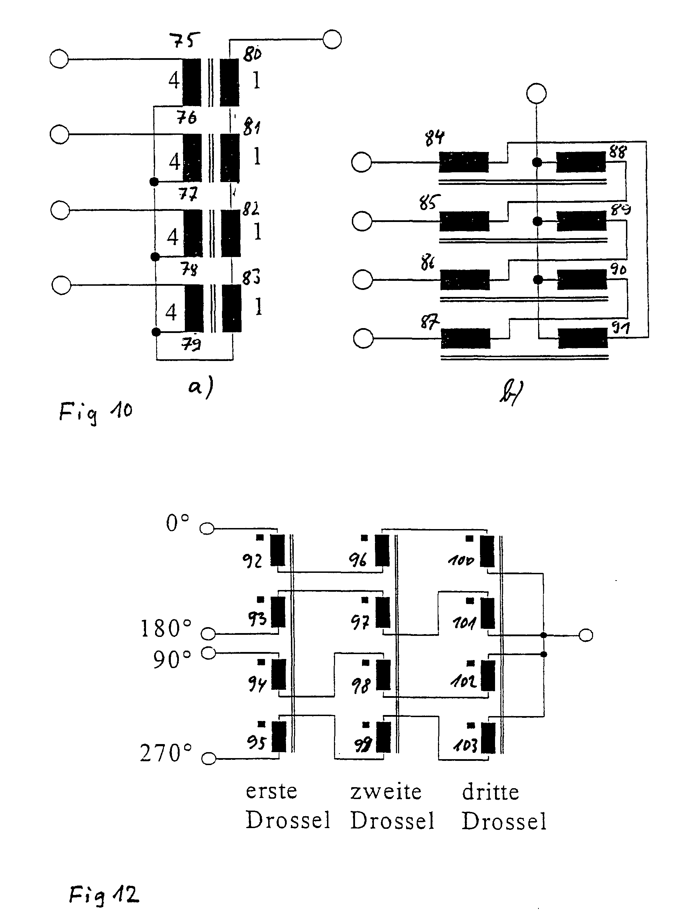

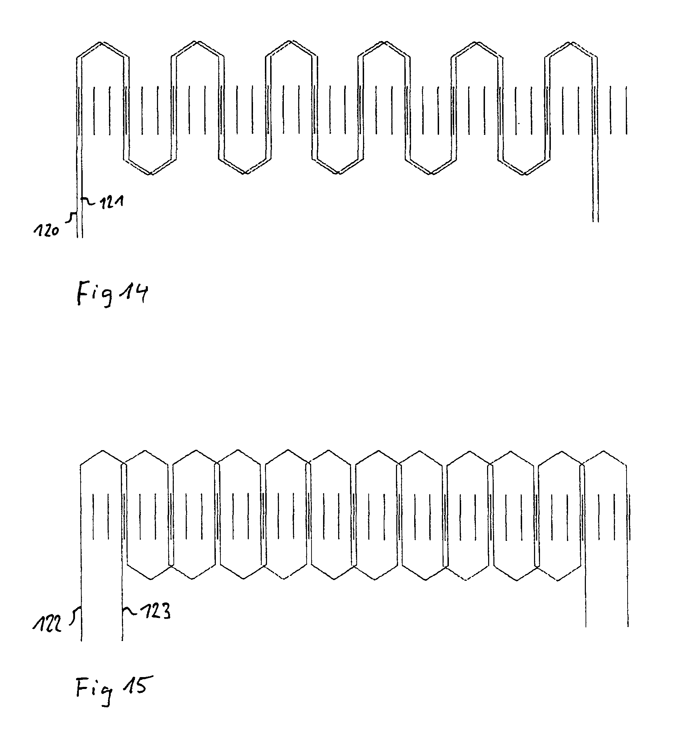

In den Figuren 10, 11, 12 und 13 sind verschiedene Drosselanordnungen dargestellt und die Figuren 14 und 15 zeigen Beispiele für getrennte Maschinenwicklungen.

Beschreibung

Bei statischen Umrichtern für die Umformung von elektrischer Energie werden Leistungselektronik-Halbleiter eingesetzt. Dabei lassen sich Umrichter häufig in sogenannte Halbbrücken zerteilen. So sind z.B. Umrichter für Dreiphasenbetrieb aufgebaut durch drei Halbbrücken die teilweise auch zusammengefaßt werden in ein komplettes Umrichtermodul. Auch DC-DC-Wandler lassen sich durch eine Halbbrücke realisieren. Eine Halbbrücke besteht jeweils aus einem High-Side-Schalter und einem Low-Side-Schalter, im folgenden auch als Ventil oder Halbleiterventil bezeichnet und umfaßt eine von der Phasenzahl abhängige Zahl von Transistoren. Die Schalter können beispielsweise auch aus einer geeigneten Anzahl von Pulswechselrichterelementen aufgebaut sein.

Die Kapazität des Zwischenkreiskondensators der für die Funktionsfähigkeit eines derartigen Halbbrückenzweiges erforderlich ist, ergibt sich bei einer Ansteuerung mit einer Pulsweitenmodulation (PWM) der Frequenz $f_{PWM}$ zu:

$$C = \frac{\nu \cdot (1-\nu) \cdot I}{f_{PWM} \cdot U}$$

Darin ist I der Ausgangsstrom der Halbbrücke, die Spannungsschwankung $\Delta U$ der zulässige sog. Spannungsrippel im Zwischenkreis (Eingangsseite) und $\nu$ das momentane Tastverhältnis der Puls-Weiten-Modulation (PWM). Eine mehrphasigen Brücke wird durch eine entsprechende Anzahl von Halbbrücken gebildet. Die Ansteuerungen dieser Halbbrücken erfolgt meist gegeneinander versetzt. Dadurch kann die Belastung des Zwischenkreises reduziert werden, da die einzelnen Phasen versetzt Strom aus dem Zwischenkreis entnehmen, und der Spannungsrippel wird entsprechend geringer. Der maximale Spannungsrippel tritt bei einem PWM-Tastverhältnis von ν = 0,5 auf.

Häufig werden zur Erreichung der geforderten Stromtragfähigkeit der Schalter mehrere Halbleiterventile in einer Halbbrücke parallel geschaltet. Die parallel geschalteten Ventile müssen gleichzeitig angesteuert werden um einen "heißen Zweig" in der Halbbrücke und damit ein Zwischenkreiskurzschluß auf jeden Fall zu vermeiden. Dadurch verhält sich die Parallelschaltung der Einzelventile wie "ein" Schalter.

Wird nun die Parallelschaltung der Halbleiterventile am Ausgang aufgehoben entsteht aus dieser Halbbrücke eine vielphasige Anordnung. Diese weist den Vorteil auf, daß die Belastung des Zwischenkreises deutlich vermindert werden kann, wenn die Teilzweige gegeneinander angesteuert werden. Werden die parallelen Zweige über Induktivitäten entkoppelt lassen sie sich wieder parallelschließen und den Vorteil der kleineren Zwischenkreisbelastung kann auch bei Dreiphasenanordnungen erzielt werden, ja sogar bei der "einphasigen" Anordnung eines DC/DC-Wandlers.

Bei Umrichtern und DC/DC-Wandlern, die durch Halbbrücken aufgebaut werden, können auch Halbbrücken als komplette Module realisiert werden die gleichzeitig einen Zwischenkreiskondnensator und/oder eine Ansteuerschaltung mit integrieren.

Häufig werden die beiden Brückenschalter durch eine Parallelschaltung von mehreren Einzelventilen bzw. Schaltern gebildet. In den einzelnen Figuren werden hierzu beispielhaft vier parallele Ventile , beispielsweise Feldeffekttransistoren (MOSFETs) gezeigt. Es kann aber auch jede andere Anzahl von parallelen Halbleitern verwendet werden. Als Halbleiter können selbstverständlich auch andere Ventile als die bereits erwähnten Feldeffekttransistoren verwendet werden, z.B. Bipolartransistoren oder Pulswechselrichterelemente etc. Ein dreiphasiger Umrichter kann somit aus drei derartigen Halbbrückenmodulen aufgebaut werden. Ein DC/DC-Wandler kann durch eine Halbbrücke mit einer geeignet wählbaren Anzahl von Ventilen realisiert werden. Die Ansteuerung der Ventile bzw. Schalter erfolgt über eine Steuer- bzw. Regeleinrichtung, die die erforderlichen Ansteuersignale abgibt. In einem Fahrzeugbordnetz kann als Steuer- bzw. Regeleinrichtung der Spannungsregler oder ein Bordnetzsteuergerät oder ein sonstiges Steuergerät eingesetzt werden.

Parallele Wicklungszweige für Vielphasenbetrieb

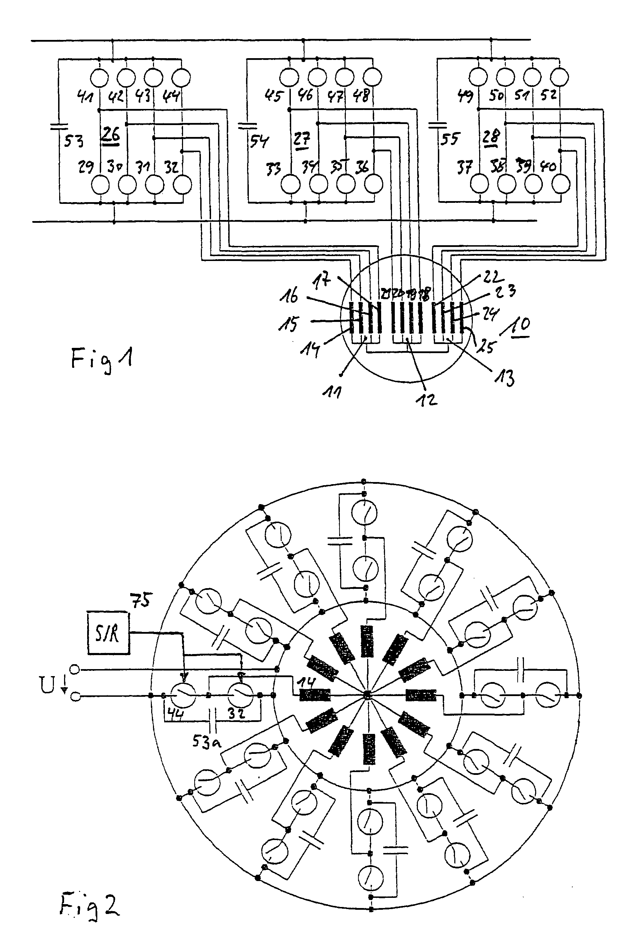

Sowohl bei einphasigen Spannungswandlern als auch bei dreiphasigen Maschinen kann die Wicklung aus verschiedenen parallelgeschalteten Wicklungszweigen aufgebaut werden. Prinzipiell ist es möglich diese Parallelschaltung der einzelnen Wicklungszweige z.B. bei dreiphasigen Maschinen in der Maschine aufzuheben und die Anschlüsse getrennt an den Umrichter zu führen. Ein Schaltungsbeispiel ist in Figur 1 dargestellt.

Bei diesem Schaltungsbeispiel liefert ein Drehstromgenerator 10 mit den Phasenwicklungen 11, 12 und 13 die elektrische Energie. Die Phasenwicklungen sind ihrerseits in jeweils vier paralellgeschaltete Wicklungszweige 14 bis 17, 18 bis 21 und 22 bis 25 unterteilt. Den Phasenwicklungen 11, 12 und 13 zugeordnet sind die Halbbrücken 26, 27 und 28, die jeweils vier Low-Side-Schalter 29 bis 40 und vier High-Side-Schalter 41 bis 52 umfassen. Parallel zu jeder Halbbrücke 26, 27 und 28 liegen die Zwischenkreiskondensatoren bzw. Zwischenkreiskapazitäten 53, 54 und 55.

Die parallelen Wicklungszweige können nun getrennt an die parallelen Zweige der jeweiligen Halbbrücke des Umrichters angeschlossen werden. Hierdurch wird die dreiphasige Maschine zu einer vielphasigen Anordnung. Werden nun die parallelen (auf der Ausgangsseite, bzw. Maschinenseite, nicht mehr verbundenen) Zweige einer Halbbrücke versetzt angesteuert ergibt sich eine drastisch reduzierte Belastung des Zwischenkreiskondensators. Diese Schaltung weist jedoch den Nachteil auf, daß zwischen Umrichter und Maschine eine Vielzahl an Verbindungsleitungen erforderlich ist.

Diese Schaltung kann jedoch vorteilhaft verwendet werden, wenn die einzelnen Halbbrücken als komplette Module aufgebaut werden und direkt in der Maschine integriert werden. Dabei können die Halbbrückenmodule auch verteilt über den Maschinenumfang angeordnet werden.

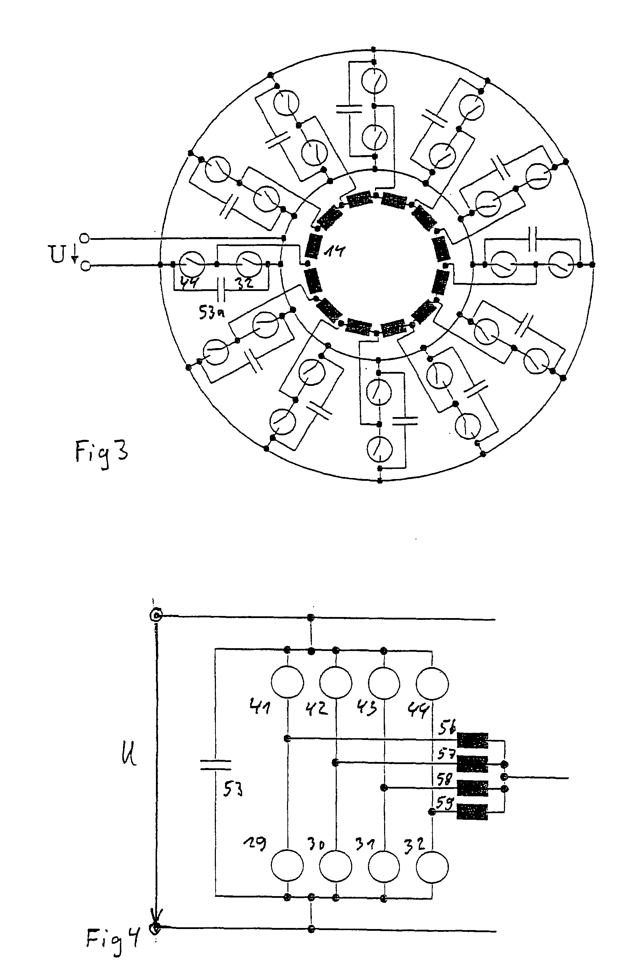

Selbstverständlich ist auch anstelle der vielphasigen Sternschaltung auch die Dreieckschaltung möglich. Die Dreieckschaltung geht bei einer vielphasigen Anordnung in eine Ringschaltung über, wie sie auch bei der Gleichstrommaschine existiert. Sie ist hier als 12-phasig dargestellt, aber auch jede andere Phasenzahl ist möglich, insbesondere sind auch ungerade Anzahlen von Phasen denkbar. Zwei Schaltungsbeispiele sind in den Figuren 2 und 3 angegeben. Dabei ist beispielhaft jeweils nur ein Wicklungszweig 14 mit den zugehörigen Ventilen bzw. Schaltern 32 und 44 und einer Zwischenkreiskapazität 53a mit einem Bezugszeichen versehen. Die Ansteuerung der Schalter erfolgt durch die Steuer- bzw. Regeleinrichtung 75. In der Figur 2 ist die Verbindung zwischen der Steuer- bzw. Regeleinrichtung 75 und den Ventilen beispielhaft nur für die Schalter 32 und 44 dargestellt, diese Verbindung besteht selbstverständlich auch zu den übrigen Schaltern. Die vom Generator 10 im Betrieb gelieferte Spannung ist mit U bezeichnet.

Anstelle der dargestellten Vielphasenanordnungen ist es auch möglich eine Schaltung der Wicklung zu wählen die aus mehreren getrennten Sternen oder Dreiecken gebildet wird. Dabei ist es beispielhaft auch möglich für die Realisierung der vielphasigen Anordnung eine mehrpolige Maschine je Polpaar mit einer getrennten Wicklung zu versehen und diese getrennt an die Umrichterzweige anzuschließen.

Paralleler Betrieb innerhalb einer Halbbrücke

Da die Aufteilung der Wicklung in parallele Wicklungsstränge bei einem externen Umrichter den Nachteil der großen Anzahl von Verbindungsleitungen zwischen Umrichter und Maschine aufweist, sollen diese parallelen Wicklungsstränge wieder zusammengeschaltet werden und eine Schaltung innerhalb der Halbbrücke die Möglichkeit der versetzten Taktung ermöglichen.

Das selbe Verfahren mit versetzter Ansteuerung der parallelen Ventile innerhalb einer Halbbrücke kann auch dann realisiert werden, wenn die Teilzweige am Ausgang zu einer Phase zusammengeschaltet werden. Hierzu ist jedoch vor diesem Knotenpunkt, in dem die Teilzweige zusammenlaufen, jeweils eine kleine Induktivität erforderlich, die einen heißen Zweig innerhalb der Halbbrücke verhindert.

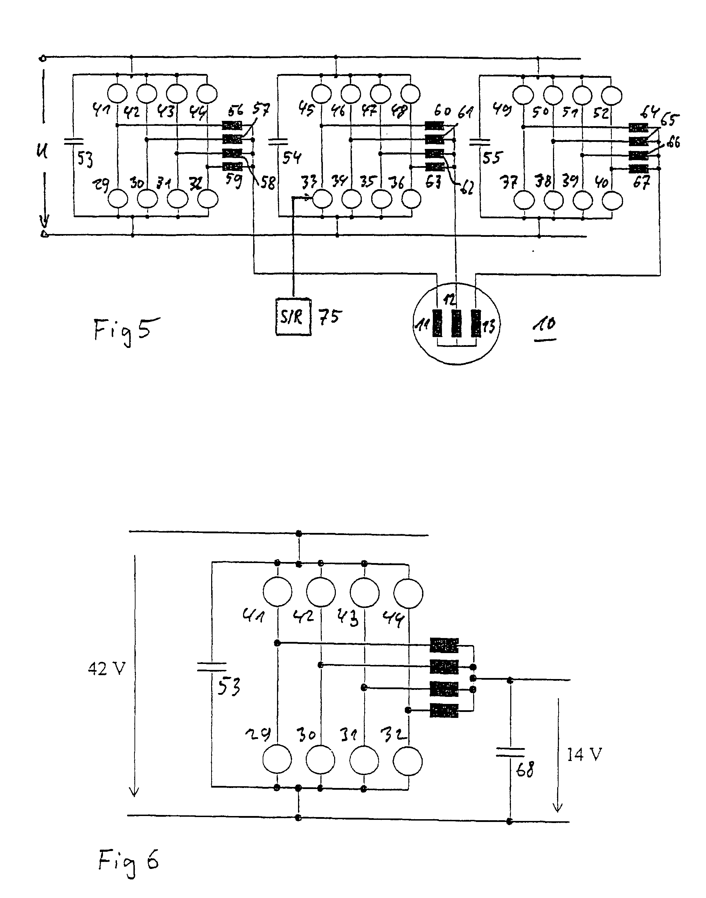

Figur 4 zeigt ein Modul einer Halbbrücke für einen Umrichter mit versetzter Ansteuerung, beispielhaft werden hier vier parallele Ventile bzw. Schalter 29, 30, 31 und 32 sowie 41, 42, 43 und 44 dargestellt. Es ist jedoch auch jede andere Zahl von parallelen Ventilen, bzw. eine andere Anzahl paralleler Teilzweige, möglich. Zusätzlich sind Entkoppelinduktivitäten 56, 57, 58 und 59 vorhanden, die für die Funktionsfähigkeit des Umrichters erforderlich sind.

Figur 5 zeigt einen vollständiger Dreiphasenumrichter für einen Drehstromgenerator, beispielsweise einen Generator oder einen Starter/Generator in einem Kraftfahrzeug, der drei identische Halbbrücken für versetzte Ansteuerung umfaßt. Jeder der Halbbrücken sind Induktivitäten 56 bis 67 zugeordnet Die Beschreibung der in Figur 5 aufgezeigten Umrichteranordnung entspricht den Ausführungen zu den Figuren 1 bis 4. Für die Ansteuerung der Schalter bzw. Ventile ist beispielhaft die Verbindung zwischen dem Schalter bzw. Ventil 33 und der Steuer- und Regeleinrichtung 75 angegeben.

Ein Ausführungsbeispiel für einen Spannungswandler (DC/DC-Wandler) zeigt Figur 6. Eine Halbbrücke mit ansteuerbaren Schaltern 29 bis 32 und 41 bis 44 sowie den Entkoppelinduktivitäten 56 bis 59 kann auch als reiner DC/DC-Wandler verwendet werden. Hierzu ist das Brückenmodul nur durch einen Kondensator 68 am Ausgang zu erweitern. Die für einen DC-DC-Wandler erforderliche Induktivität ist bereits durch die Entkopplungsinduktivitäten 56 bis 58 vorhanden.

Prinzip der versetzten Taktung

Die versetzte Taktung der parallelen Transistoren innerhalb eines Brückenzweiges hat eine erheblich kleinere Belastung des zugeordneten Zwischenkreiskondensators zur Folge. Dies soll anhand von einem Beispiel gezeigt werden. Dabei werde für die prinzipielle Darstellung zunächst von großen Induktivitäten an den Ausgängen ausgegangen, so daß die Ströme als konstant betrachtet werden können. Desweiteren werde der Zwischenkreisstrom nur einer Halbbrücke betrachtet. Bei der vollständigen Umrichterbrücke heben sich zumindest teilweise die Oberwellenanteile im Zwischenkreisstrom auf, so daß sich günstigere Verhältnisse ergeben.

Für die weiteren Betrachtungen wird nun beispielhaft von vier parallelen Schaltern (k = 4) ausgegangen. Bei der versetzten Taktung innerhalb einer Halbbrücke existieren dann neben den Tastverhältnissen $\nu = 0$ und 1 drei weitere Tastverhältnisse, bei denen der Zwischenkreiskondensator 53, 54, 55 nach Figur 1, 4 oder 5, zumindest theoretisch, nicht belastet wird. Dies gilt für die Tastverhältnisse $\nu = 2/8$; 4/8 und 6/8. Die Anzahl der belastungsfreien Tastverhältnisse ist prinzipiell gleich der Anzahl der parallelen Schalter k plus eins (k+1).

Die Tastverhältnisse, bei denen der Zwischenkreiskondensator bzw. die Zwischenkreiskondensatoren theoretisch nicht belastet wird, liegen allgemein bei $\nu = g/k$. Darin ist g eine ganze Zahl zwischen 0 und k (g=0;1;2;...k). Die Tastverhältnisse bei denen die maximale Belastung des Kondensators bzw. der Kondensatoren auftritt, liegen jeweils zwischen diesen belastungsfreien Tastverhältnissen bei $\nu = (g'-1)/2k$ Dabei ist $g'=1;2;...k$ ; also ohne den Wert 0.

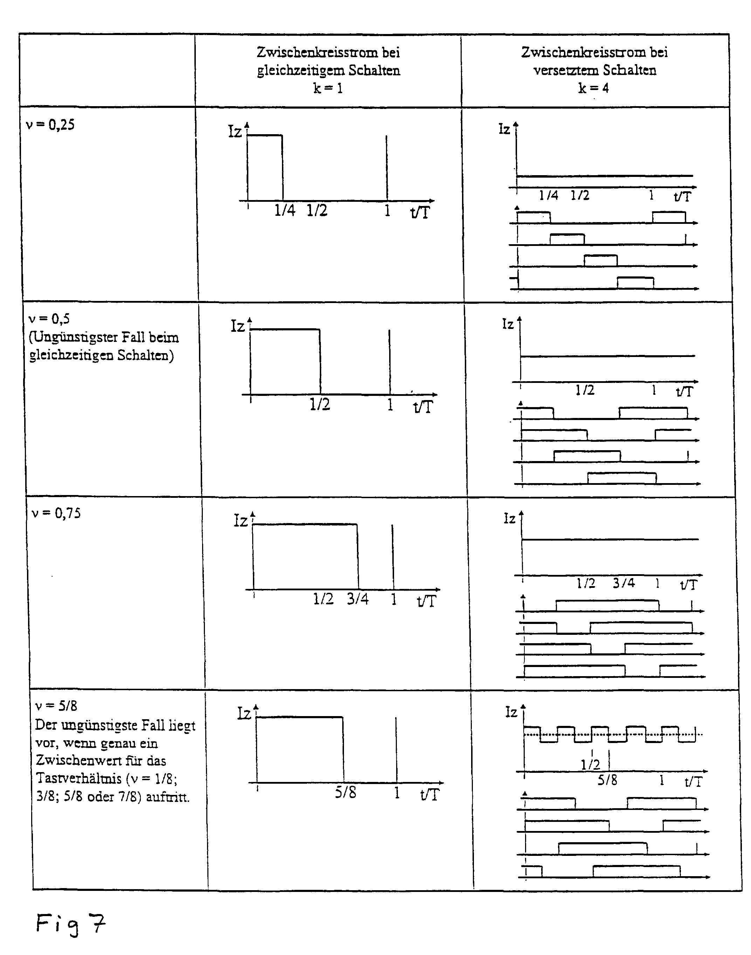

In der Figur 7 sind für verschiedene Tastverhältnisse die sogenannten Zwischenkreisströme aufgetragen, die vom Zwischenkreiskondensator geliefert werden sollten. Zunächst sind dabei die Tastverhältnisse $\nu = \frac{1}{4}$, $\frac{1}{2}$ und $\frac{3}{4}$ dargestellt. Bei diesen drei Tastverhältnissen ergibt sich bei der versetzten Taktung zumindest theoretisch keine Belastung des zugehörigen Zwischenkreiskondensators. Als weiteres Beispiel wird das Tastverhältnis $\nu = 5/8$ dargestellt. Bei diesem Tastverhältnis ergibt sich bei versetzter Taktung eine maximale Belastung des Zwischenkreiskondensators.

Die unterschiedliche Kondensatorbelastung beim gleichzeitigen Ansteuern der Schalter bzw. Ventile und beim versetzten Ansteuern der Schalter bzw. Ventile läßt sich der folgenden Zusammenstellung entnehmen:

| | Zwischenkreisstrom bei gleichzeitigem Schalten | Zwischenkreisstrom bei versetztem Schalten |
|---|---|---|
| ungünstiges Tastverhältnis | $\nu = \frac{1}{2}$ | $\nu = 5/4$ |
| Frequenz | Taktfrequ. $f_{PWM}$ | $4\,f_{PWM} = kf_{PWM}$ |
| Stromsprung | Strangstr. $I_{Strang}$ | $\frac{1}{4}\,I_{strang} = I_{Strang}/k$ |

(fortgesetzt)

|  | Zwischenkreisstrom bei gleichzeitigem Schalten | Zwischenkreisstrom bei versetztem Schalten |
|---|---|---|
| effektiver Kondensatorstrom | ½ $I_{Strang}$ | 1/8 $I_{Strang}$ = $I_{Strang}$/2k |
| erforderliche Kapazität für den gleichen Spannungshub | C | C/16 = C/k² |

Durch dieses Ansteuerverfahren kann somit der bisher benötigte Elektrolytkondensator reduziert werden. Bei vier parallelen Zweigen ergibt sich als Zwischenkreiskapazität:

$$C = C_{alt} \cdot \frac{1}{k^2} = \frac{C_{alt}}{16}$$

Wird zusätzlich auf ein anderes Kondensatorprinzip mit größerer Stromtragfähigkeit im Vergleich zu Elektrolytkondensatoren übergegangen, kann meist die Kapazität nochmals reduziert werden. Bei Elektrolytkondensatoren ist meist die Strombelastung maßgebend für die Größe, da diese die beschränkende Größe ist. Daher ist die eingesetzte Kapazität meist größer als es für den geforderten Spannungsrippel erforderlich wäre.

Weiterhin kann auch ein größerer Spannungsrippel (Spannungsschwankung) zugelassen werden, der bei den großen Frequenzen (k $f_{PWM}$) leicht zu filtern ist, was die Zwischenkreiskapazität weiter reduziert.

Erforderliche Induktivität

Für die Funktion einer versetzten Ansteuerung der parallelen Schalter sind zusätzlich Induktivitäten 56 bis 67 erforderlich. Diese liegen, wie in den Figuren 4, 5 und 6 dargestellt, am Ausgang jedes Teilbrückenzweiges. Als Näherung kann zunächst davon ausgegangen werden, daß die Spannung am Ausgangsknoten auf dem konstanten Mittelwert der getakteten Spannung liegt ($\overline{U}$=v.$U_Z$). Somit ergibt sich eine Spannung über der Induktivität von

$$U_L = \begin{cases} U_Z - v \cdot U_Z & \text{für} \quad v \cdot T_{PWM} \\ - v \cdot U_Z & \text{für} \quad (1-v) \cdot T_{PWM} \end{cases}$$

Das Integral über $U_L$ muß bei vernachlässigtem ohmschen Widerstand gleich Null sein

$$\left( \int_0^{T_{PWM}} U_L \, dt = 0 \right) .$$

Die erforderliche Induktivität ergibt sich bei einer zulässigen Stromschwankung von ΔI zu

$$L = v \cdot (1-v) \cdot \frac{U_Z \cdot T_{PWM}}{\Delta I}$$

Dabei tritt der ungünstigste Fall bei einem Tastverhältnis von v = 0,5 auf. Die Ausgangsinduktivität stellt gleichzeitig ein Ausgangsfilter dar, so daß die Flankensteilheit der Ausgangsspannung gemildert wird. Durch eine zusätzliche Kapazität an den Phasenabgängen des Umrichters kann diese Filterwirkung weiter verbessert werden. Zusätzlich können hier auch die Leitungsinduktivitäten von den Schaltelementen bis zum Vereinigungspunkt ausgenützt werden.

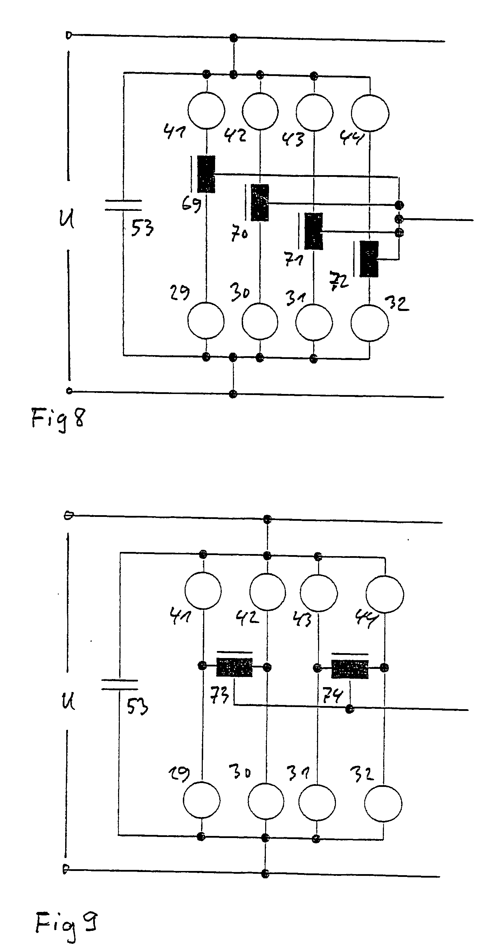

Für die Induktivitäten am Ausgang der Halbbrücken sind auch kombinierte Drosseln denkbar. Die Anordnung der Drosseln erfolgt in Form von Längsdrosseln nach Figur 8 oder Querdrosseln nach Figur 9.

Bei der Schaltung mit Längsdrosseln 69 bis 72 ist die Funktionsfähigkeit prinzipiell vorhanden. Hierbei lassen sich beispielsweise alle Spulen, die jeweil eine Mittenanzapfung aufweisen, auf einen gemeinsamen Kern aufbringen. Problematisch kann jedoch die Streuung zwischen den beiden Wicklungen der Drosseln sein. Zudem sind die Drosseln niederinduktiv in den Zweig zwischen den Transistoren der Schalter bzw. Ventile einzubauen.

Jedoch können hier gängige Entlastungsschaltungen für die Ventile verwendet werden.

Wird jeweils zwischen zwei Ventilzweigen eine gekoppelte Drossel eingefügt, ergibt sich eine Anordnung mit Querdrosseln 73 und 74. Dabei übernimmt eine Querdrossel die Funktion für beide Zweige. Es ist somit die halbe Anzahl an Drosseln gegenüber der Lösung mit Längsdrosseln erforderlich. Zudem ist jede Drossel nur für den Differenzstrom der beiden Zweige zu dimensionieren. Der mittlere Ausgangsstrom dieser beiden Zweige hebt sich im Drosselfluß auf. Diese Variante ist besonders vorteilhaft, wenn die beiden Zweige, zwischen denen die Drossel liegt, jene sind, die um $T_{PWM}/2$ gegeneinander versetzt sind.

Da der Umrichter intern einen Stromrippel, also eine Stromschwankung an seinen Schaltelementen sieht, sind die Durchlaß- und Schaltverluste entsprechend größer. Der Stromrippel ist unabhängig vom momentanen Laststrom. Er wird in erster Linie nur durch das Tastverhältnis ν bestimmt.

$$\Delta I = \nu \cdot (1-\nu) \cdot \frac{U_Z \cdot T_{PWM}}{L}$$

Somit tritt der Stromrippel in voller Größe auch im Teillastbereich und im Leerlauf der Maschine auf. Die zusätzlichen Umrichterverluste durch den Stromrippel entstehen ebenfalls im Teillastbereich. Es werden deshalb auch noch Maßnahmen angegeben, die eine Verbesserung im Teillastbereich ergeben.

Verbesserung im Teillastbereich

Hinsichtlich der auftretenden Verluste ist ein Umrichter mit gleichzeitigem Schalten im Leerlauf und im unteren Teillastbereich günstiger als andere Lösungen. Im Teillastbereich kann der gleichzeitig schaltende Umrichter auch mit einer kleineren Kapazität auskommen. Somit ließe sich der Teillastwirkungsgrad der gesamten Anordnung wieder verbessern, wenn bei dem versetzt schaltenden Umrichter der Versatz der Ansteuerventile mit dem Laststrom verändert wird. Das bedeutet im Leerlauf wird der Umrichter als gleichzeitig schaltender Umrichter betrieben, und im Vollastbereich wird er zum versetzt schaltenden Umrichter mit einem zeitlichen Versatz der Steuerimpulse um $T_{PWM}/k$. Dies entspricht einer symmetrischen Verteilung der Ansteuerimpulse für die einzelnen Schalter bzw. Ventile.

Die bereits erwähnte Möglichkeit des Einsatzes von gekoppelten Drosseln lassen sich mit den in den Figuren 10 bis 12 aufgezeigten Anordnungen erzielen. In den Figuren 13 bis 15 sind Bauformen und Wicklungsanordnungen dargestellt, die geeignet sind, die verschiedenen Teilzweige des Umrichters zu entkoppeln. Außerdem wird eine Maschinenwicklung für einen Klauenpolgenerator in Dreieckschaltung angegeben, die ebenfalls zur Entkopplung von zwei parallelen Teilzweigen geeignet ist. Diese Wicklung ist besonders gut geeignet, da sie in heutige Generatoren mit zwei Wicklungsdrähten integrierbar ist.

Gekoppelte oder kompensierte Drosseln

Da nur die Induktivitäten zwischen den Teilzweigen der Halbbrücke erforderlich sind um die Teilzweige gegeneinander zu entkoppeln und da der Laststrom der Halbbrücke keine Zusatzinduktivität erfordert, kann die Drosselgröße durch gekoppelte Induktivitäten reduziert werden. Die gekoppelten Drosseln sollen so dimensioniert werden, dass die Lastströme der Teilzweige sich gegenseitig kompensieren und zu keiner magnetischen Belastung der Drossel führen. Nur der Differenzstrom zwischen den einzelnen Teilzweigen (Stromrippel) führt dann zu einem magnetischen Feld. Der Drosselkern muß nur das Feld des Differenzstromes führen und kann somit deutlich kleiner dimensioniert werden. die Wicklungen tragen jedoch den vollen Strom und sind auf diesen zu dimensionieren.

Für die Realisierung von gekoppelten Drosseln gibt es verschiedene Möglichkeiten, die in Figur 10 dargestellt sind. Nachfolgend werden verschiedene Prinzipen für gekoppelte Drosseln aufgezeigt. Dabei wird beispielhaft von vier versetzen Schaltern ausgegangen. Die Schaltungsprinzipien lassen sich aber auch auf andere Schalterzahlen übertragen.

A: Einfach gekoppelte Drosseln

Die gekoppelten Drosseln 75 bis 91 können einzeln, wie in Figur 10 dargestellt, aufgebaut werden (Die Ventile bzw. Schalter sind in Figur 10, 11 und 12 jeweils als Kreis dargestellt, ohne eigenes Bezugszeichen) In der linken Anordnung wird der Summen- oder Laststrom durch alle vier Drosseln 75 bis 83 geführt. Für k=4 ist auf der Eingangsseite eine Windungszahl von 4(=k) erforderlich. In der rechten Anordnung nach Figur 10b sind jeweils zwei Zweige gegeneinander geschaltet.

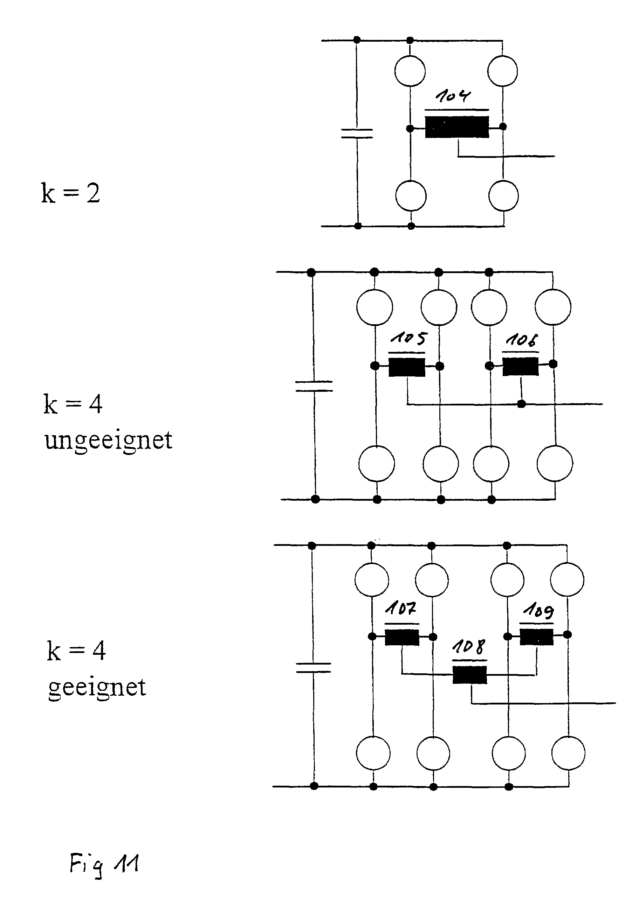

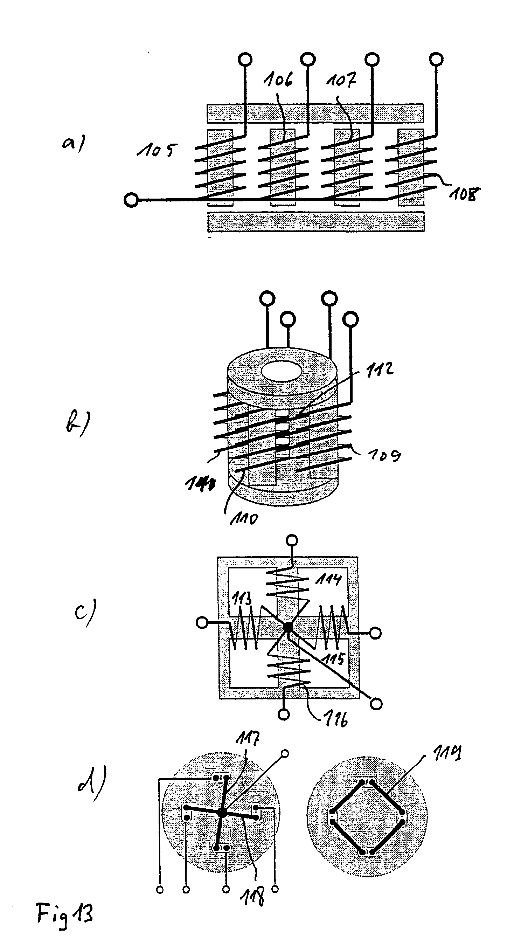

Ausgehend von Figur 10 können auch je zwei Drosseln zusammengefaßt werden auf einem Kern. Verschiedene Möglichkeiten zeigt Figur 12. Die Drosseln 92 bis 95 bilden dann eine erste Drossel, die Drosseln 96 bis 99 eine zweite Drossel und die Drosseln 100 bis 103 eine dritte Drossel. Gekoppelte Drosseln weisen zwei Wicklungen um einen Kern auf. Dabei sind die beiden Wicklungen so geschaltet, dass ihr Wicklungssinn zwischen den Eingängen und dem Ausgang gegensinnig ist. Für k=2 kann (siehe Figur 11) die gekoppelte Drossel zwischen den beiden Umrichterteilzweigen eingesetzt werden.

Bei k>2 ist die Anwendung von gekoppelten Drosseln in der nebenstehenden Form leider nicht möglich. Werden zwei gekoppelte Drosseln eingesetzt so ergeben Schaltzustände, bei denen jeweils beide Anschlüsse einer Drossel auf dem selben Potential liegen, heiße Zweige. Es ist nur noch deren Streuinduktivität wirksam.

Für mehr als zwei parallele Zweige können je zwei Zweige mit einer gekoppelten Drossel zusammengefaßt werden. Die Drosselausgänge müssen durch eine weitere gekoppelte Drossel entkoppelt werden. Somit sind für k=4 drei gekoppelte Drosseln erforderlich.

B: Kompensierte Drosseln

Um bei k>2 (z.B. k=4) baugleiche gekoppelte Drosseln verwenden zu können, werden weitere Schaltungsanordnungen eingesetzt. Hierzu sind Drosseln 104 bis 109 erforderlich die k Wicklungen auf einem Kern besitzen. Damit sind auch ungerade Schalterzahlen einfach realisierbar. Es sind k-1 Drosseln mit jeweils k Spulen erforderlich. Ein Ausführungsbeispiel für kompensierte Drosseln ist in Figur 12 dargestellt.

C: Mehrphasendrossel

Das Prinzip der kompensierten Drosseln kann jedoch auch bei mehr als zwei parallelen Teilzweigen auf einem Kern zusammengefaßt werden. Hierzu sind jedoch Drosseln mit k Schenkeln erforderlich. Auf jedem dieser Schenkel sitzt die Drosselspule eines Teilzweiges. Für den Aufbau von Mehrphasendrosseln gibt es verschiedene Bauformen. Auch hier wird wieder beispielhaft von vier Zweigen ausgegangen. Die Drosseln sind hier als Wicklungen 105 bis 116 auf je einem Kern oder auf gemeinsamen Kernen dargestellt. Verschiedene Anordnungen sind in Figur 13 angegeben.

Parallele Anordnung

Die Bedingung, dass ein Gleichstrom in allen Zweigen (Nullsystem) zu keinem Fluß führen soll, wird durch ein Säulentransformator erfüllt. Aus der Drehstromtechnik ist dieses Prinzip zur Unterdrückung von Nullsystemen bekannt. Eine gleiche Durchflutung in allen Transformatorschenkeln führt zwar zu einer magnetischen Spannung zwischen dem oberen und unteren Joch, jedoch stehen hier keine magnetisch leitenden Flußweg zur Verfügung. Es kann sich nur ein Streufluß über den Luftraum von Joch zu Joch ausbilden.

Kreisanordnung

Eine weitere Reduzierung des Gewichtes kann erreicht werden, wenn die einzelnen Säulen nicht in einer Ebene nebeneinander sondern auf einem Kreis angeordnet werden. Die Joche können dann als geschlossener Ring ausgebildet werden und benötigen nur noch den halben Querschnitt.

Sternanordnung

Eine weitere Möglichkeit für den strukturellen Aufbau der Drossel ergibt sich, wenn die vier Säulen sternförmig angeordnet werden. Das innere Joch schrumpft zusammen. Diese Drossel bietet den Vorteil, dass alle Drosselspulen wieder in einer Ebene liegen. Jedoch wird gleichzeitig das äußere Rückschlußjoch relativ lang. Die Sternanordnung kann auch in einem Mehrlochkern realisiert werden. Dabei sind jedoch nur Windungszahlen von eins oder zwei sinnvoll, jedoch lassen sich hierdurch sehr einfache Aufbauten realisieren. Figur 13d zeigt eine mögliche Ausführungsform mit den Wicklungen 116 bis 119.

Getrennte Maschinenwicklungen

In den Figuren 14 und 15 sind zwei Beispiele für getrennte Wicklungen aufgezeigt. In Figur 14 sind parallele Drähte 120 und 121 vorhanden. Die Ausgangsinduktivitäten können entfallen, wenn die Maschinenwicklung aus parallelen Wicklungszweigen besteht. Werden diese nicht zusammengeschaltet, so können die Wicklungsenden direkt an die Teilzweige der Umrichterbrücke angeschlossen werden. Bei Klauenpolmaschinen wir die Ständerwicklung durch zwei parallel gewickelte Drähte hergestellt. Die Wicklung wird erst auf der Gleichrichterplatte zu einer Dreieckschaltung mit den parallelen Drähten verbunden. Die Wicklung wird als Wellenwicklung ausgeführt. Der Wicklungsstern wird hierzu mit den beiden parallelen Drähten gewickelt und es ergibt sich das nachfolgende Wicklungsschema für einen Strang.

Die Induktivität von zwei parallelen Runddrähten der Länge 1 mit dem Radius r und einem Mittelpunktabstand von d ergibt sich zu:

$$L = \frac{\mu_0}{\pi} \cdot l \cdot \left( \frac{1}{4} + In \frac{d}{\sqrt{r_1 \cdot r_2}} \right)$$

Dabei stellt der erste Wert in der Klammer (konstant = ¼) die innere Induktivität der Leitung dar und der zweite Wert ist die äußere Induktivität. In Realität ergeben sich, da die Drähte nicht streng parallel verlaufen, etwas größere Werte als in der Theorie.

Beim Ausführungsbeispiel nach Figur 15 erfolgt eine Änderung der Wicklung. Dabei wird die heute übliche parallele Führung der Drähte aufgegeben und durch zwei Wicklungssterne ersetzt, so können die Wickelköpfe der beiden Drähte 122 und 123 getrennt werden.

Somit erhöht sich die Induktivität zwischen den zwei Drähten um die doppelte Wickelkopfstreuung. Damit kann die wirksame Induktivität um ein Mehrfaches erhöht werden im Vergleich zu parallelen Drähten. Somit ist eine derartige Wicklung geeignet für versetztes Takten mit zwei parallelen Zweigen. Höhere Zweigzahlen sind hierdurch nicht möglich, dies kann jedoch im Umrichter durch zusätzliche Drosseln möglich gemacht werden.

**Patentansprüche**

1. Umrichter für die Umformung der von einem Generator (10) gelieferte elektrische Energie insbesondere für ein Fahrzeugbordnetz, mit wenigsten einer Halbbrücke (26, 27, 28), die wenigstens einen High-Side- (41 bis 52) und wenigstens einen mit dem High-Side-Schalter (41 bis 52) verbundenen Low-Side-Schalter (29 bis 40) aufweist, wobei die Verbindung der High-Side-Schalter (41 bis 52) und der Low-Side-Schalter (29 bis 40) mit Phasenwicklungen (11, 12, 13) des Generators (10) in Verbindung steht und eine vorgebbare Anzahl von Schaltern umfasst, die einen gemeinsamen Anschluss aufweisen, an dem die Spannung (U) abgreifbar ist und mit einem Kondensator (53, 54, 55), der parallel zur Halbbrücke (26, 27, 28) liegt, **dadurch gekennzeichnet, dass** die Phasenwicklungen (11, 12, 13) des Generators (10) aus jeweils einer vorgebbaren Anzahl k von parallel liegenden Wicklungen (14 bis 25) besteht, wobei k größer als 1 ist und dass der Umrichter ein Dreiphasenumrichter ist, der drei identische Halbbrücken (26, 27, 28) umfasst, die doppelt so viele Schalter aufweisen als zugehörige Wicklungszweige (14 bis 25) vorhanden sind, und parallel liegende Schalter innerhalb einer Halbbrücke (26, 27, 28) versetzt getaktet werden.

2. Umrichter nach Anspruch 1, **dadurch gekennzeichnet, dass** die High-Side- (41 bis 52) und die Low-Side-Schalter (29 bis 40) Feldeffekt- oder Bipolartransistoren oder Pulswechselrichterelemente umfassen, die mit Hilfe einer Steuer- und Regeleinrichtung (75) angesteuert werden und insbesonders pulsweitenmoduliert betrieben werden.

3. Umrichter nach einem der vorhergehenden Ansprüche, **dadurch gekennzeichnet, dass** die Verbindung zwischen dem gemeinsamen Anschluss der High-Side- (41 bis 52) und der Low-Side-Schalter (29 bis 40) mit dem die elektrische Energie erzeugenden Mittel jeweils wenigstens eine Induktivität (56 bis 67) aufweist.

4. Umrichter nach Anspruch 3, **dadurch gekennzeichnet, dass** die Induktivitäten (56 bis 67) als Längsdrosseln in Serie zwischen einander zugeordneten Schaltern liegen oder als Querdrosseln zwischen jeweils vier Schaltem liegen.

5. Umrichter nach einem der vorhergehenden Ansprüche, **dadurch gekennzeichnet, dass** die Halbbrücke (26, 27, 28) so ausgestaltet ist und betrieben wird, dass sie als Gleichspannungswandler arbeitet, und zusätzlich zum Zwischenkreiskondensator (53) am Ausgang einen weiteren Kondensator (68) aufweist, an dem eine von der Spannung am Zwischenkreiskondensator verschiedene Spannung auftritt.

6. Umrichter nach einem der vorhergehenden Ansprüche, **dadurch gekennzeichnet, dass** die getaktete Ansteuerung der Schalter mit pulsweitenmodulierten Signalen erfolgt, mit einem Tastverhältnis high zu low, das so gewählt wird, dass der Zwischenkreiskondensator (53) nur wenig belastet wird und insbesondere gleich 2/8, 4/8 und 6/8 ist.

7. Umrichter nach einem der vorhergehenden Ansprüche, **dadurch gekennzeichnet, dass** Halbbrücken Teilumrichter bilden und die Teilumrichter zu einzelnen Modulen zusammengefasst sind und im Gehäuse des Generators integriert sind.

8. Umrichter nach einem der vorhergehenden Ansprüche, **dadurch gekennzeichnet, dass** die erforderlichen Drosseln als einfach gekoppelte oder kompensierte Drosseln ausgestaltet sind.

9. Umrichter nach einem der vorhergehenden Ansprüche, **dadurch gekennzeichnet, dass** die erforderlichen Drosseln als Mehrphasendrosseln ausgestaltet sind und in einer parallelen Anordnung oder in einer Kreisanordnung oder in einer Sternanordnung angeordnet sind, und jeweils angepasste Joche aufweisen.

10. Umrichter nach einem der vorhergehenden Ansprüche, **dadurch gekennzeichnet, dass** die Wicklungen der elektrischen Maschine zwei parallele Drähte oder zwei Wicklungssterne aufweist.

**Claims**

1. Converter for transforming the electrical energy supplied by a generator (10), in particular for a vehicle electrical system, having at least one half bridge (26, 27, 28) which has at least one high-side switch (41 to 52) and at least one low-side switch (29 to 40) connected to the high-side switch (41 to 52), the connection of the high-side switches (41 to 52) and the low-side switches (29 to 40) being connected to phase windings (11, 12, 13) of the generator (10) and comprising a prescribable number of switches which have a common terminal at which the voltage (U) can be tapped, and having a capacitor (53, 54, 55) which is situated in parallel with the half bridge (26, 27, 28), **characterized in that** the phase windings (11, 12, 13) of the generator (10) consist in each case of a prescribable number k of windings (14 to 25) situated in parallel, k being greater than 1, and **in that** the converter is a three-phase converter which comprises three identical half bridges (26, 27, 28) which have twice as many switches as there are present associated winding branches (14 to 25), and switches situated in parallel are clocked in an offset fashion inside a half bridge (26, 27, 28).

2. Converter according to Claim 1, **characterized in that** the high-side (41 to 52) and the low-side switches (29 to 40) comprise field-effect or bipolar transistors or pulse-controlled inverter elements which are driven with the aid of a controller regulation device (75) and are, in particular, pulse-width-modulated.

3. Converter according to one of the preceding claims, **characterized in that** the connection between the common terminal of the high-side switches (41 to 52) and the low-side switches (29 to 40) with the means generating electrical energy respectively have at least one inductor (56 to 67).

4. Converter according to Claim 3, **characterized in that** the inductors (56 to 67) are situated in series as direct-axis inductors between mutually assigned switches, or are situated as quadrature-axis inductors between in each case four switches.

5. Converter according to one of the preceding claims, **characterized in that** the half bridge (26, 27, 28) is designed and operated such that it operates as a DC-DC converter, and has at the output in addition to the intermediate-circuit capacitor (53) a further capacitor (68) at which a voltage different from the voltage across the intermediate-circuit capacitor occurs.

6. Converter according to one of the preceding claims, **characterized in that** the clock drive of the switches is performed with the aid of pulse-width-modulated signals and with a high-to-low pulse duty factor which is selected such that the intermediate-circuit capacitor (53) is only slightly loaded, and is equal to 2/8, 4/8 and 6/8, in particular.

7. Converter according to one of the preceding claims **characterized in that** half bridges form converter sections, and the converter sections are combined to form individual modules and are integrated in the housing of the generator.

8. Converter according to one of the preceding claims, **characterized in that** the required inductors are configured as singly-coupled or compensated inductors.

9. Converter according to one of the preceding claims, **characterized in that** the required inductors are configured as multiphase inductors and are arranged in a parallel arrangement or in a circuit arrangement or in a star arrangement, and have matched yokes in each case.

10. Converter according to one of the preceding claims, **characterized in that** the windings of the electric machine have two parallel wires or two winding stars.


**Revendications**

1. Commutateur pour la conversion de l'énergie électrique fournie par un générateur (10), en particulier pour un réseau de bord de véhicule, avec au moins un demi-pont (26, 27, 28) qui présente au moins un commutateur côté haut (41 à 52) et au moins un commutateur côté bas (29 à 40) relié au commutateur côté haut (41 à 52), la liaison des commutateurs d'extrémité supérieure (41 à 52) et des commutateurs côté bas (29 à 40) étant faite avec des bobines de phase (11, 12, 13) du générateur (10) et comprenant un nombre prédéfinissable de commutateurs qui présentent un raccordement commun sur lequel on peut prélever la tension (U), et avec un condensateur (53, 54, 55) disposé en parallèle au demi-pont (26, 27, 28),
**caractérisé en ce que**
les bobines de phase (11, 12, 13) du générateur (10) sont constituées à chaque fois d'un nombre k prédéfinissable de bobines (14 à 25) disposées parallèlement, où k est supérieur à 1, et le commutateur est un commutateur triphasé qui comprend trois demi-ponts (26, 27, 28) identiques qui présentent deux fois plus de commutateurs que les bobines d'induit (14 à 25) correspondantes et des commutateurs disposés parallèlement sont synchronisés de façon décalée à l'intérieur d'un demi-pont (26, 27, 28).

2. Commutateur selon la revendication 1,
**caractérisé en ce que**
les commutateurs d'extrémité supérieure (41 à 52) et les commutateurs d'extrémité inférieure (29 à 40) comprennent des transistors bipolaires ou à effet de champ ou des éléments d'onduleur d'impulsions qui sont excités à l'aide d'une installation de commande et de réglage (75) et qui fonctionnent notamment en modulation d'impulsions en largeur.

3. Commutateur selon l'une des revendications précédentes,
**caractérisé en ce que**
la liaison entre le raccordement commun des commutateurs d'extrémité supérieure (41 à 52) et des commutateurs d'extrémité inférieure (29 à 40) avec le moyen qui produit l'énergie électrique présente à chaque fois au moins une inductance (56 à 67).

4. Commutateur selon la revendication 3,
**caractérisé en ce que**
les inductances (56 à 67) sont montées en série en tant que bobines de choc longitudinales entre des commutateurs associés l'un à l'autre ou se trouvent en tant que bobines de choc transversale entre quatre commutateurs à chaque fois.

5. Commutateur selon l'une des revendications précédentes,
**caractérisé en ce que**
le demi-pont (26, 27, 28) est conçu et fonctionne de telle manière qu'il opère en tant que commutateur continu-continu, et présente en plus du condensateur de circuit intermédiaire (53) à la sortie un autre condensateur (68), sur lequel existe une tension différente de la tension sur le condensateur de circuit intermédiaire.

6. Commutateur selon l'une des revendications précédentes,
**caractérisé en ce que**
l'excitation synchronisée des commutateurs est réalisée avec des signaux modulés en impulsions en largeur selon un rapport de synchronisation supérieur/inférieur qui est choisi de telle manière que le condensateur de circuit intermédiaire (53) n'est que peu sollicité et qu'il est de préférence égal à 2/8, 4/8 et 6/8.

7. Commutateur selon l'une des revendications précédentes,
**caractérisé en ce que**
les demi-ponts forment des commutateurs partiels et les commutateurs partiels sont regroupés en modules particuliers et sont intégrés dans le boîtier du générateur.

8. Commutateur selon l'une des revendications précédentes,
**caractérisé en ce que**
les bobines de choc nécessaires sont conçues en tant que bobines de choc simplement couplées ou compensées.

9. Commutateur selon l'une des revendications précédentes,
**caractérisé en ce que**
les bobines de choc nécessaires sont conçues en tant que bobines de choc polyphasées et sont disposées selon un arrangement en parallèle ou selon un arrangement circulaire ou selon un arrangement en étoile et présentent à chaque fois des culasses ajustées.

10. Commutateur selon l'une des revendications précédentes,
**caractérisé en ce que**
les bobines de la machine électrique présentent deux fils parallèles ou deux étoiles de bobines.

Fig 1

Fig 2

Fig 3

Fig 4

Fig 5

Fig 6

| | Zwischenkreisstrom bei gleichzeitigem Schalten k = 1 | Zwischenkreisstrom bei versetztem Schalten k = 4 |
|---|---|---|
| ν = 0,25 | | |
| ν = 0,5 (Ungünstigster Fall beim gleichzeitigen Schalten) | | |
| ν = 0,75 | | |
| ν = 5/8 Der ungünstigste Fall liegt vor, wenn genau ein Zwischenwert für das Tastverhältnis (ν = 1/8; 3/8; 5/8 oder 7/8) auftritt. | | |

Fig 7

Fig 8

Fig 9

Fig 10

a)   b)

erste     zweite    dritte
Drossel   Drossel   Drossel

Fig 12

k = 2

k = 4
ungeeignet

k = 4
geeignet

Fig 11

Fig 13

120 121

Fig 14

122 123

Fig 15